(19) Europäisches Patentamt
European Patent Office
Office européen des brevets

(11) Veröffentlichungsnummer : **0 436 539 B1**

# (12) EUROPÄISCHE PATENTSCHRIFT

(45) Veröffentlichungstag der Patentschrift : **01.07.92 Patentblatt 92/27**

(21) Anmeldenummer : **89903089.4**

(22) Anmeldetag : **10.03.89**

(86) Internationale Anmeldenummer : **PCT/DE89/00153**

(87) Internationale Veröffentlichungsnummer : **WO 90/02859 22.03.90 Gazette 90/07**

(51) Int. Cl.$^5$ : **E04F 13/18,** C04B 28/26, C04B 40/06, // (C04B28/26, 14:02, 24:04, 24:26)

## (54) VERBLENDERELEMENT MIT ZUGEHÖRIGEM KLEBEMÖRTEL.

(30) Priorität : **13.09.88 DE 3831123**

(43) Veröffentlichungstag der Anmeldung : **17.07.91 Patentblatt 91/29**

(45) Bekanntmachung des Hinweises auf die Patenterteilung : **01.07.92 Patentblatt 92/27**

(84) Benannte Vertragsstaaten : **AT BE CH DE FR GB IT LI LU NL SE**

(56) Entgegenhaltungen : **DE-A- 3 045 747**

(56) Entgegenhaltungen :
**DE-A- 3 429 429**
**DE-A-29 061 00**
**DE-C- 302 834**
**GB-A- 1 499 804**

(73) Patentinhaber : **THÖNE, Gerd**
**Akazienstrasse 31**
**W-4902 Bad Salzuflen (DE)**

(72) Erfinder : **THÖNE, Gerd**
**Akazienstrasse 31**
**W-4902 Bad Salzuflen (DE)**

(74) Vertreter : **Bauer, Wulf, Dr.**
**Wolfgang-Müller-Strasse 12**
**W-5000 Köln 51 (DE)**

EP 0 436 539 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf Verblenderelement mit zugehörigem Klebemörtel zur Herstellung von Belägen für die Verkleidung von Gebäudeinnen- und -außenwänden, bei dem das Verblenderelement eine Verblenderplatte oder ein Verblenderriemchen ist und hergestellt ist aus einer Masse auf der Basis von (a) einem Kunststoffpolymerisat, insbesondere einer Vinyl- oder Acrylatdispersion, (b) einem Weichmacher aus einem hochsiedenden Bestandteil, insbesondere einem Phtalat und gegebenenfalls einem niedriger siedenden Weichmacher, insbesondere einem Äther, (c) üblichen Füllstoffen wie Quarzsand, aufgeblähten Mineralien und Farbpigmenten sowie gegebenenfalls (d) strukturgebenden Körnungen.

Bei diesem aus der DE-A-30 45 747 vorbekannten Verblenderelement mit zugehörigem Klebemörtel sind die Verblenderelemente so biegsam, daß sie um relativ kleine Radien, beispielsweise Radien von 1 cm und weniger, um Innen- oder Außenecken geigen werden können. Diese hohe Biegsamkeit ist für eine ausreichende Zeitspanne zwischen Herstellung des plattenförmigen Verblenderelements und Aufbringen auf einen Baukörper gegeben. Die leichte Verformbarkeit verschwindet später. Da das vorbekannte Verblenderelement jedoch zusätzlich einen zweiten Weichmacher enthält, bleibt eine Elastizität erhalten. Aus der DE-A-3 429 429 ist ein Verblenderelement auf der Basis von Kunstharzdispersion, Füllstoff und Wasserglas bekannt. Die GB-A-1 499 803 beschreibt die Verwendung von Glykol-Di-Azetat als Härter für Wasserglas. Aus der DE-C-302 834 ist ein Härtungsmechanismus über die Kieselsolbildung durch Einwirkung von Säure bekannt.

Die leichte Verformbarkeit des vorbekannten Verblenderelements hat zwar den Vorteil, daß die bekannten Verblenderelemente günstig verlegt werden können, und zwar nicht nur in den beschriebenen Eckenbereichen, sondern auch auf unregelmäßigen und nicht ebenen Flächen. Die Verblenderelemente lassen sich bequem und einfach zuschneiden, Bewegungen des Baukörpers werden auch später noch ausgeglichen. Als nachteilig hat sich jedoch herausgestellt, daß die Flexibilität über eine zu lange Zeit erhalten bleibt. Die Verblenderelemente, die dem Aussehen nach echten Steinen gleichen, sind beim Betasten weich, sie geben bei Fingerdruck innerhalb der genannten Zeitspanne so stark nach, daß der ansich positive ästhetische Eindruck einer mit den Verblenderelementen belegten Wand wieder zerstört wird und Kunden bemängelten, daß man zwar an der Hauswand das Aussehen eines Steines habe, es sich aber in Wirklichkeit um Knetgummi handele.

Nun ist es zwar sinnvoll, zwischen Herstellung des Verblenderelements und seinem Aufbringen eine ausreichend lange Zeitspanne vorzusehen, um die Lagerzeit eines Verblenderelementes nicht unnötig einschränken zu müssen, was zu einer zusätzlichen Überwachung im Baustoffmarkt usw. führen würde. Die Verblenderelemente müssen mit einem Verfallsdatum versehen werden, bei zu knapper Zeitvorgabe wären zuviele Rückläufe zu erwarten. Dies kann zwar durch eine luftdichte Verschweißung von Verblenderelementen in Verpackungen verbessert werden, eine unbegrenzte Lagerung ist aber hierdurch auch nicht zu erreichen.

Der Weichmacher muß andererseits wiederum in so ausreichender Konzentration und in einer solchen Beschaffenheit vorliegen, daß die gewünschte, hohe Flexibilität vorliegt, also die Verblenderelemente so um Ekken geknickt werden können, daß der Eindruck eines natürlichen Steines mit scharfer Ecke entsteht.

Hier setzt nun die Erfindung ein. Sie hat es sich zur Aufgabe gemacht, die Nachteile des vorbekannten Verblenderelements mit zugehörigem Klebermörtel zu vermeiden und dieses Produkt dahingehend weiterzuentwickeln, daß die mittels des Klebemörtels auf eine Wand aufgebrachten Verblenderelemente auch beim Befühlen hart sind, ein Unterschied zu einem Stein jedenfalls durch Betasten nicht unmittelbar zu erkennen ist.

Diese Aufgabe wird ausgehend von dem vorbekannten Verblenderelement mit zugehörigem Klebemörtel gelöst durch ein Verblenderelement mit den Merkmalen des Patentanspruchs 1.

Wenn ein derartiges Verblenderelement in den zugehörigen Klebemörtel, der auf eine Gebäudefläche aufgetragen ist, gelegt und eingedrückt wird, kommt der Ester der Alkandisäure in Kontakt mit dem Natrium- bzw. Kaliumsilikat, also mit dem Wasserglas und wird eine Aushärtung des Wasserglases eingeleitet. Das Verblenderelement härtet dadurch zu einem glasharten, in der Härte einem Stein ähnlichen Körper aus. Hierdurch wird erreicht, daß - ausgelöst durch den Zeitpunkt des Aufbringens des Verblenders - der Verblender nach einer gewissen Zeit nicht nur optisch, sondern auch fühlbar nicht mehr von einem echten Stein zu unterscheiden ist.

Durch Bemessung der Zugabe des Wasserglases in das Verblenderelement, oder auch durch örtliche Lokalisierung des Wasserglases nur an der Außenfläche des Verblenderelements, kann erreicht werden, daß das Verblenderelement noch eine ausreichende Nachgiebigkeit beibehält, um bei Bewegungen im Bauwerkskörper auftretende Spannungen ausgleichen zu können. Andererseits kann aber auch der Klebemörtel so ausreichend dauerhaft flexibel bleiben, daß trotz steinhartem Verblenderelement Spannungen ausgeglichen werden können.

Die verwendeten organischen Härter sind Mischungen von Methyl- und/oder Äthylestern der zweibasigen Säuren Bernsteinsäure, Glutarsäure und Adipinsäure, die gemeinsam auch als Alkandisäuren bezeichnet werden. Die Zusammensetzung der organischen Härter läßt sich allgemein durch die beiden nachstehenden For-

meln wiedergeben:

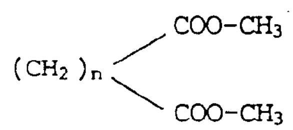

und

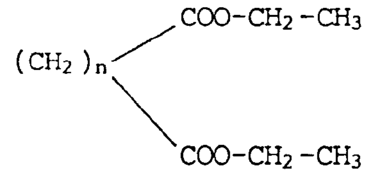

n=2,3,4

Anstelle einer Mischung der Ester können aber auch einzelne Ester verwendet werden, es ist jedoch vorteilhafter, die Estermischungen einzusetzen.

Bei Vermischen dieser Ester mit dem Alkalisilikat tritt eine allmähliche Verseifung ein, wobei die zur Gelbildung erforderlichen Säuren bzw. deren ionisierte Salze freigesetzt werden. Die Gelbildung läuft in kurzer Zeit, beispielsweise einer Stunde, ab. Zum Zeitpunkt der Gelbildung sind bereits 10 bis 20 % des eingesetzten Härters umgesetzt. Nach etwa sechs Stunden ist die Umsetzung vollständig erfolgt. Aus der Zunächst niedrig molekularen Kieselsäure entwickelt sich durch Polykondensation unter Abspaltung von $H_2O$ und fester Si-O-Si-Bindungen Polykieselsäure, die zunehmend zum Aufbau eines räumlich sich verfestigenden Gitterwerkes führt. Der Zusammenhalt dieser Si-O-Si-Brücken im verfestigten Gel ist relativ stark, eine rückläufige Reaktion ist bei den praktisch vorkommenden Bedingungen nahezu ausgeschlossen.

In einer bevorzugten Weiterbildung enthält das Verblenderelement eine Menge an Wasserglas, die für eine steinharte Aushärtung des Verblenderelements ausreicht, die Menge an Alkandisäure-Dimethylester oder -Äthylester im Klebemörtel ist ausreichend für das Aushärten des Natrium- oder Kaliumsilikats. Hierdurch werden steinharte Verblenderelemente erzielt.

In einer anderen Ausbildung ist im Verblenderelement 5 Gewichtsprozent des Natrium- oder Kaliumsilikats enthalten, der Klebemörtel weist 0,5 % des Alkandisäure-Dimethylesters oder -Äthylesters auf. Die verlegten Verblenderelemente behalten eine gewisse Elastizität, die ausreicht, um Bewegungen im Bauwerkskörper elastisch auszugleichen.

In einer bevorzugten Weiterbildung ist ein Weichmachergemisch aus einem hochsiedenden Phtalat und einem niedriger siedenden Äther vorgesehen, das sich zusammensetzt aus 20 % Dibutylphtalat und 30 % Polypropylenglykolphenyläther sowie 50 % eines Niedrigsieders, z. B. Glykolmonobutyläther.

Der Klebemörtel ist wasserhaltig und wird dem Verbraucher wasserhaltig angeliefert, die Härterkomponente, also der Alkandisäure-Dimethylester oder -Äthylester kommt dadurch nicht aus seiner flüssigen Phase heraus. Das Silikat im Verblenderelement geht dagegen zunächst bei der Herstellung des Verblenders aus der flüssigen Phase in die Trockenphase über und beeinflußt die Flexibilität des Verblenderelementes nicht. Das trocken vorliegende Silikat ist aber wasserlöslich. Es geht wieder in die reaktive, flüssige Form über, wenn das Riemchen in den Klebemörtel gelegt wird, um es an der Wand zu befestigen. Es zieht die Feuchtigkeit aus dem Klebemörtel heraus. In diesem Zustand reagiert es dann auf den Härter aus den genannten Alkandisäureestern, härtet aus und erreicht die gewünschte Endhärte, in der es entweder hart wie Stein ist oder eine gewünschte Restelastizität aufweist.

Ein wesentlicher Gedanke der Erfindung liegt somit darin, ausgelöst durch den Moment des Aufbringens der Verblenderelemente in ein Klebemörtelbett auf einer Wand einen Härtungsprozeß auszulösen, der die für die Verlegung des Verblenderelements erwünschte, hohe Flexibilität des Verblenderelements abbaut und im Endeffekt zu einem starren, steinähnlichen Verblenderelement führt, das weitgehend nur noch durch chemische Untersuchungen, jedenfalls nicht durch Befühlen, von einem Verblenderelement aus Stein unterschieden werden kann.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:

Fig. 1 einen Schnitt durch die Wand eines Bauwerkkörpers mit aufgebrachtem Klebemörtelbett und darin

eingelegten Verblenderelement und

Fig. 2 eine Darstellung entsprechend Fig. 1, jedoch in einer geänderten Ausführung des Verblenderelements.

Auf die Fläche 20 eines Bauwerkskörpers 22 ist zunächst eine Klebemörtelschicht 24 aufgebracht, in diese ist ein plattenförmiges Verblenderelement 26 gelegt und eingedrückt, so daß eine vollflächige Anlage, möglichst unter Vermeidung von Luftblasen, erzielt ist. Der Klebemörtel enthält zusätzlich zu dem vorbekannten, beispielsweise für die Verlegung von Verblenderelementen gemäß Patent 30 45 747 benutzten Klebemörtel, in wässriger Lösung vorliegenden Härter für Wasserglas, nämlich Alkandisäuredimethylester oder -Äthylester. Unmittelbar nach Herstellen eines Kontaktes zwischen der Klebemörtelschicht 24 und dem Verblenderelement 26 kann Feuchtigkeit im Sinne der Pfeile 28 in das Verblenderelement 26 eindringen, dadurch wird der Härter aus der Schicht 24 in das Verblenderelement 26 transportiert. Im Verblenderelement 26 ist Wasserglas in trokkener Form, vorzugsweise als Alkalisilikatpulver, vorhanden, das durch das Wasser aufgelöst wird und durch die Härterkomponente aus der Klebemörtelschicht aushärtet.

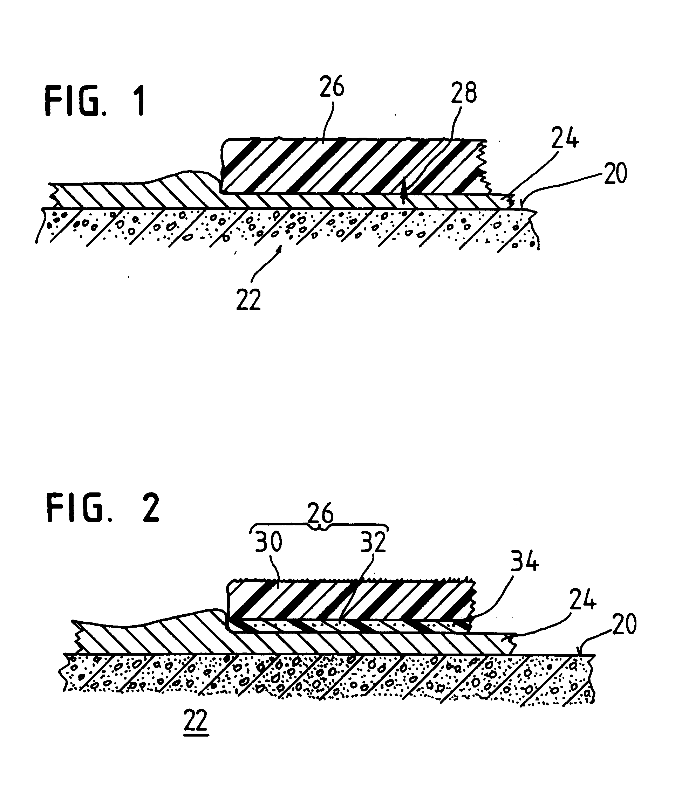

Das Ausführungsbeispiel nach Fig. 2 entspricht im wesentlichen dem Ausführungsbeispiel nach Fig. 1, jedoch ist das Verblenderelement 26 schichtförmig aufgebaut aus einer äußeren Schicht 30 und einer der Klebemörtelschicht 24 zugewandten inneren Schicht 32. Letztere enthält kein Wasserglas, so daß in dieser Schicht auch keine Aushärtung stattfindet, sie bleibt so nachgiebig, daß sie die üblichen Bewegungen eines Bauwerkkörpers elastisch abfangen kann, dieser Zustand wird nach Ausdampfen des hochsiedenden Weichmachers erhalten. Die Schicht 32 ist wasserdurchlässig. In der Schicht 30, deren Dicke ein Mehrfaches größer ist als die Dicke der Schicht 32, befindet sich Wasserglas vorzugsweise in Pulverform, diese Schicht 30 härtet aus, sobald Wasser und Härter durch die Schicht 32 in die Schicht 30 gelangen.

Als vorteilhaft hat es sich erwiesen, im Verblenderelement eine biegesteife Einlage, beispielsweise ein Drahtnetz, unterzubringen, das einmal dem Verblenderelement mitgegebene Biegungen, insbesondere in Ekkenbereichen, beibehält, ohne daß es zu Rückfederungen kommt. Ein derartiges Drahtnetz ist als 34 in der Schicht 32 der Fig. 2 angedeutet. Alternativ hierzu kann der Klebemörtel auch mit einer Kontaktklebefähigkeit versehen werden, so daß ein elastisches Rückfedern der um Ecken verlegten Verblenderelemente nicht befürchtet werden muß.

Im folgenden wird ein Ausführungsbeispiel wiedergegeben:

1. Masse für die Herstellung von plattenförmigen Verblenderelementen

50 kg getrockneter Quarzsand, Körnungsband 0 - 2 mm
2 kg Perlite
10 kg strukturgebende Körnung, Quarzkies 1 - 3 mm
5 kg Farbpigment
15 kg Vinylharzdispersion oder Acrylatdispersion
4 kg Kali-Wasserglas, 50 Beaume
1 - 2 % Weichmachergemisch, bestehend aus 50 % Glykolmonobuthyläther,
20 % Dibuthylphtalat und 30 % Polypropylenglykolphenyläther.

2. Klebemörtel, gebrauchsfertig, zum Verkleben der getrockneten Verblenderelemente in Form von Riemchen

25 kg Wasser
1 kg Celluloseäther
3 kg Testbenzin
25 kg Kunstharzdispersion, Vinylharz oder Acrylat
50 kg Quarzmehl, 100 u
100 kg Quarzsand, 0 - 0,6 mm
1 kg Bernsteinsäuredimethylester.

**Patentansprüche**

1. Verblenderelement mit zugehörigem Klebemörtel zur Herstellung von Belägen für die Verkleidung von Gebäudeinnen- und -außenwänden (22), bei dem das Verblenderelement (26) eine Verblenderplatte oder ein Verblenderriemchen ist und hergestellt ist aus einer Masse auf der Basis von (a) einem Kunststoffpolymerisat, insbesondere einer Vinyl- oder Acrylatdispersion, (b) einem Weichmacher aus einem hochsiedenden Zusatz,

insbesondere einem Phtalat und gegebenenfalls einem niedriger siedenden Zusatz, insbesondere einem Äther, (c) üblichen Füllstoffen wie Quarzsand, aufgeblähten Mineralien und Farbpigmenten sowie gegebenenfalls (d) strukturgebenden Körnungen, dadurch gekennzeichnet, daß das Verblenderelement (26) weiterhin Natrium- oder Kaliumsilikat aufweist, daß im Klebemörtel (24) ein Alkandisäure-Methylester und/oder -Äthylester enthalten ist, und daß der Klebemörtel (24) wasserhaltig ist.

2. Verblenderelement mit zugehörigem Klebemörtel nach Anspruch 1, dadurch gekennzeichnet, daß das Verblenderelement (26) eine Menge an Natrium- oder Kaliumsilikat enthält, die für eine steinharte Aushärtung des Verblenderelements ausreicht, und daß die Menge an Alkandisäure-Dimethylester oder -Äthylester im Klebemörtel (24) für das Aushärten des Natrium- oder Kaliumsilikats ausreicht.

3. Verblenderelement mit zugehörigem Klebemörtel nach Anspruch 1 oder 2, dadurch gekennzeichnet, daß im Verblenderelement 0,5 bis 10, vorzugsweise 5 Gewichtsprozent an Natrium- oder Kaliumsilikat und im Klebemörtel 0,1 bis 3, vorzugsweise 0,5 Gewichtsprozent an Alkandisäure-Dimethylester oder -Äthylester enthalten sind.

4. Verblenderelement mit zugehörigem Klebemörtel, dadurch gekennzeichnet, daß das Weichmachergemisch 1 bis 3, vorzugsweise 2 Gewichtsprozente des Verblenderelements ausmacht und vorzugsweise 50 % Glykolmonobuthyläther, 20 % Dibuthylphtalat und 30 % Polypropylenglykolphenyläther aufweist.

5. Verblenderelement mit zugehörigem Klebemörtel nach einem der Ansprüche 1 bis 4, dadurch gekennzeichnet, daß das Verblenderelement (26) getrocknet (bis auf Restfeuchte) ist.

6. Verblenderelement mit zugehörigem Klebemörtel nach Anspruch 1, dadurch gekennzeichnet, daß das Natrium- oder Kaliumsilikat 40 bis 60 %, vorzugsweise 50 % Feststoffgehalt hat.

7. Verblenderelement mit zugehörigem Klebemörtel nach Anspruch 1, dadurch gekennzeichnet, daß der Klebemörtel (24) im abgebundenen Zustand eine Elastizität aufweist, die zu einem Ausgleich von üblichen Spannungen im Bauwerk ausreicht.

8. Verblenderelement mit zugehörigem Klebemörtel nach einem der Ansprüche 1 bis 7, dadurch gekennzeichnet, daß das Verblenderelement (26) zweischichtig (30, 32) aufgebaut ist und nur eine Außenschicht (30) Kalium- bzw. Natriumsilikat enthält.

9. Verblenderelement mit zugehörigem Klebemörtel nach einem der Ansprüche 1 bis 8, dadurch gekennzeichnet, daß zur Herstellung der Verblenderelemente (26) pulverförmiges Alkalisilikat verwendet wird.

## Claims

1. A facing element with corresponding adhesive mortar for producing lining of inner and outer walls (22) of buildings in which the element (26) is a sheet or a strip and is composed of a mass on the basis of (a) a plastic polymer, in particular a dispersion of vinyl or acrylate, (b) a plasticizer made of a high-boiling additive, in particular a phthalate and if necessary a low-boiling additive, in particular an ether, (c) usual fillers such as quartz sand, swelling minerals and color pigments, (d) if necessary structuring granules, characterized in that the element (26) furtheron comprises sodium or potassium silicate, that the adhesive mortar (24) comprises an alkane diacid dimethylester or ethylester, and that the adhesive mortar is aqueous.

2. Facing element with corresponding adhesive mortar of claim 1, characterized in that the element (26) containes sufficient amount of sodium or potassium silicate to ensure that the element can dry hard as stone, and that the quantity of alkane diacid dimethylester in the adhesive mortar (24) is sufficient to ensure the hardening of the sodium or potassium silicate.

3. Facing element with corresponding adhesive mortar of claim 1 or 2, characterized in that 0.5 to 10, but ideally 5 percent by weight of the element (26) is sodium or potassium silicate and 0.1 to 3, but ideally 0.5 percent by weight of the adhesive mortar is made up of alkane diacid dimethylester or ethylester.

4. Facing element with corresponding adhesive mortar of one of the claims 1 to 3, characterized in that the plasticizer makes up 1 to 3, preferably 2 percent by weight of the element and preferably comprises 50 percent glycol mono buthyl ether, 20 percent dibutyl phthalate and 30 percent poly propylene glycol phenyl ether.

5. Facing element with corresponding adhesive mortar of one of the claims 1 to 4, characterized in that the element (26) is totally dried (apart from any residual moisture).

6. Facing element with corresponding adhesive mortar of claim 1, characterized in that the sodium or potassium silicate contains 40 to 60 percent, preferably 50 percent solids.

7. Facing element with corresponding adhesive mortar of claim 1, characterized in that the adhesive mortar (24) in its hardened state is sufficiently elastic to enable it to tolerate the usual tensions in a building.

8. Facing element with corresponding adhesive mortar of one of the claims 1 to 7, characterized in that the element (26) comprises two layers (30, 32), and that only the outside layer (30) contains potassium or sodium silicate.

9. Facing element with corresponding adhesive mortar of one of the claims 1 to 8, characterized in that alkali silicate in powder form is used in the production of the elements (26).

## Revendications

1. Elément de parement et mortier adhésif correspondant, destiné à la fabrication de garnitures pour le revêtement de murs intérieurs et extérieurs de bâtiments (22) et pour lequel l'élément de parement (26) est une plaque de parement ou un filet de parement et est fait d'une masse à base (a) d'une résine synthétique, en particulier d'un latex de vinyle ou d'acrylate, (b) d'un plastifiant fait d'un produit d'addition à point d'ébullition élevé, en particulier d'un phtalate et, le cas échéant, d'un produit d'addition à bas point d'ébullition, en particulier d'un éther, (c) de matières de remplissage usuelles comme du sable silicieux, des minéraux gonflés et des pigments colorés ainsi que, le cas échéant, (d) de granulations structurantes, caractérisé en ce que l'élément de parement (26) présente en outre du silicate de sodium ou de potassium, en ce qu'un ester méthylique et/ou un ester éthylique de diacide d'alcane sont contenus dans le mortier adhésif (24), et en ce que le mortier adhésif (24) est aqueux.

2. Elément de parement et mortier adhésif correspondant selon la revendication 1, caractérisé en ce que l'élément de parement (26) contient une quantité de silicate de sodium ou de potassium qui est suffisante pour un durcissement semblable à la pierre de l'élément de parement, et en ce que la quantité d'ester diméthylique ou d'ester éthylique de diacide d'alcane dans le mortier adhésif (24) est suffisante pour le durcissement du silicate de sodium ou de potassium.

3. Elément de parement et mortier adhésif correspondant selon les revendications 1 ou 2, caractérisé en ce que, dans l'élément de parement, sont contenus 0,5 à 10, de préférence 5 pour cent du poids de silicate de sodium ou de potassium et, dans le mortier adhésif, 0,1 à 3, de préférence 0,5 pour cent du poids d'ester diméthylique ou d'ester éthylique de diacide d'alcane.

4. Elément de parement et mortier adhésif correspondant, caractérisé en ce que le mélange de plastifiant correspond à 1 à 3, de préférence à 2 pour cent du poids de l'élément de parement et présente de préférence 50 % d'éther de monobutyle de glycol, 20 % de phtalate de dibuthyle et 30 % de phényléther de propylèneglycol.

5. Elément de parement et mortier adhésif correspondant selon l'une des revendications 1 à 4, caractérisé en ce que l'élément de parement (26) est séché (jusqu'à l'humidité résiduelle).

6. Elément de parement et mortier adhésif correspondant selon la revendication 1, caractérisé en ce que le silicate de sodium ou de potassium a une teneur en matière solide de 40 à 60 %, de préférence de 50 %.

7. Elément de parement et mortier adhésif correspondant selon la revendication 1, caractérisé en ce que le mortier adhésif (24) présente, à l'état de prise, une élasticité suffisante pour égaliser des tensions usuelles dans le bâtiment.

8. Elément de parement et mortier adhésif correspondant selon l'une des revendications 1 à 7, caractérisé en ce que l'élément de parement (26) comporte deux couches (30, 32) et ne contient qu'une couche extérieure (30) de silicate de sodium ou de potassium.

9. Elément de parement et mortier adhésif correspondant selon l'une des revendications 1 à 8, caractérisé en ce que du silicate alcalin pulvérulent est utilisé pour la fabrication des éléments de parement (26).

FIG. 1

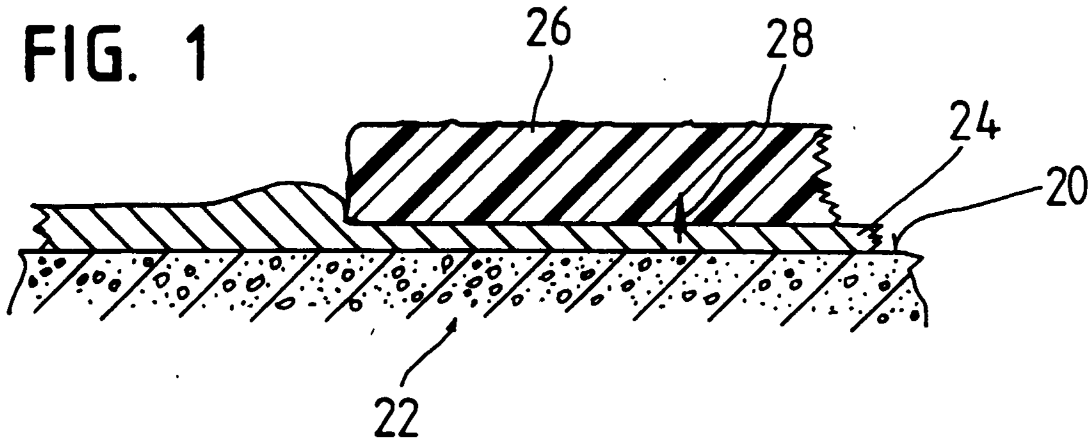


FIG. 2